Europäisches Patentamt

European Patent·Office

Office européen des brevets

(19)

(11) Numéro de publication : **0 226 211**
**B1**

(12) **FASCICULE DE BREVET EUROPÉEN**

(45) Date de publication du fascicule du brevet :
09.11.88

(51) Int. Cl.⁴ : **A 23 L  3/34**, A 23 K  1/16,
A 23 K  3/00, A 61 K 47/00

(21) Numéro de dépôt : 86117560.2

(22) Date de dépôt : 17.12.86

(54) Protection d'un aliment contre l'oxydation.

(30) Priorité : 19.02.86 CH 666/86

(43) Date de publication de la demande :
24.06.87 Bulletin 87/26

(45) Mention de la délivrance du brevet :
09.11.88 Bulletin 88/45

(84) Etats contractants désignés :
**AT BE CH DE ES FR GB IT LI LU NL SE**

(56) Documents cités :
FR-A- 2 004 476
FSTA JOURNAL, no. 446, 1971; P.T. GAMAGE et al.:
"Effects of linoleic acid hydroperoxides and their
secondary products on the growth of escherichia
coli" & Agricultural and biological chemistry, vol. 35,
no. 1, pages 33-39, 1971

(73) Titulaire : **SOCIETE DES PRODUITS NESTLE S.A.**
Case postale 353
**CH-1800 Vevey (CH)**

(72) Inventeur : **Farr, David Robert**
**Les Fleurettes**
**Ch-1817 Brent (CH)**
Inventeur : **Löliger, Jürg**
**Chemin de Pierre à Fleur 6**
**CH-1802 Corseaux (CH)**

EP 0 226 211 B1

## Description

La présente invention a pour objet un procédé de protection d'un aliment contre l'oxydation, ainsi qu'une utilisation de l'acide urique dans un aliment.

On connaît l'usage d'antioxydants de synthèse tels que par exemple le butyl-hydroxy-toluène (BHT), le butyl-hydroxy-anisole (BHA) ou le gallate de propyle (GPE), pour la protection des aliments contre l'oxydation.

On connaît également l'usage d'antioxydants dits naturels, tels que des extraits d'épices, notamment de romarin, pour la projection des aliments contre l'oxydation. Mais ces antioxydants peuvent être considérés comme des agents chimiques étrangers à l'organisme humain.

On sait par ailleurs que l'acide urique présent sous forme d'urate dans le plasma humain joue probablement un rôle important dans la défense de l'organisme contre des réactions provoquées par des phénomènes d'oxydation.

En outre, FSTA Journal, No 446, 1971, P.T. GAMAGE et al., qui concerne l'effet inhibiteur des hydroperoxydes de l'acide linoléique sur la croissance d'Escherichia coli, mentionne un effet retardateur de cette inhibition obtenu par l'addition d'acide urique dans le milieu de culture.

Enfin, FR 2004476 décrit l'usage de diverses matières additives, dont l'acide urique, pour conférer une saveur et une acceptabilité améliorées à des aliments pour chiens.

On n'a cependant jamais proposé d'utiliser l'acide urique tel quel pour la protection des aliments contre l'oxydation. L'acide urique présente en effet une certaine solubilité dans l'eau mais une solubilité pratiquement nulle dans les matières grasses. Or c'est précisément la partie grasse des aliments qui est susceptible de dégradation par oxydation. Une utilisation de l'acide urique comme antioxydant pour la protection des aliments contre l'oxydation ne pourrait apparemment se faire qu'en combinaison avec un émulsifiant. Il serait apparemment nécessaire de synthétiser un dérivé de l'acide nucléique qui serait soluble dans les matières grasses. Mais un tel dérivé pourrait présenter le risque de s'incorporer dans le corps humain.

La présente invention a pour but de proposer un procédé de protection efficace d'un aliment contre l'oxydation à l'aide d'une substance qui ne soit ni un produit de synthèse ni un agent chimique étranger à l'organisme humain et qui ne présente pratiquement aucun risque d'effet nuisible pour l'organisme.

A cet effet, le procédé selon la présente invention est caractérisé par le fait que l'on ajoute de l'acide urique à l'aliment, à raison de 5-10 000 µg d'acide urique par g de matière sèche de l'aliment. De même, la présente invention a également pour objet l'utilisation de l'acide urique dans un aliment, à raison de 5-10 000 µg d'acide urique par g de matière sèche, pour le protéger contre l'oxydation.

On a constaté en effet que, de manière surprenante, l'acide urique se prête tel quel à une utilisation comme antioxydant dans les aliments et qu'il permet tel quel une protection efficace des aliments contre l'oxydation si on l'utilise aux concentrations indiquées. Cet effet surprenant est d'autant plus précieux que l'ingestion d'acide urique tel quel n'a apparemment pas d'influence sur le taux d'urate dans le plasma humain, au contraire de l'ingestion d'acides nucléiques qui provoque une élévation de ce taux.

Dans le présent exposé, le terme « aliment » est à comprendre dans un sens large couvrant aussi bien les produits alimentaires destinés à l'alimentation des êtres humains que les aliments confectionnés industriellement pour les animaux tels que chiens, chats, volaille ou bétail par exemple. En effet, si l'acide urique est un antioxydant utile, efficace et sans effet nuisible dans lesdits produits alimentaires, il l'est à plus forte raison dans lesdits aliments pour animaux étant donné la modicité de son coût et la facilité de son utilisation selon la présente invention.

Dans le présent procédé ou la présente utilisation, on ajoute donc l'acide urique à l'aliment ou on l'utilise de préférence dans l'aliment à raison de 5-10 000 µg par g de matière sèche de l'aliment. Si l'on ajoute ou utilise moins de 5 µg/g on risque de ne pas obtenir une protection appréciable de l'aliment contre l'oxydation. Si l'on ajoute ou utilise plus de 10 000 µg/g on risque de ne pas obtenir une protection notablement plus grande que celle que l'on peut obtenir en ajoutant des quantités comprises dans le domaine indiqué. Pour mettre en œuvre le présent procédé, on peut utiliser l'acide urique sous forme de poudre fine ou en solution aqueuse. On l'utilise de préférence sous forme de sel en solution aqueuse, notamment sous forme de sel de sodium, de potassium ou d'ammonium. Pour l'utiliser sous cette forme préférée, on peut mettre en dispersion quelques % d'acide urique dans une solution aqueuse d'hydroxyde de potassium, sodium ou ammonium suffisamment concentrée pour solubiliser tout l'acide urique mis en dispersion.

On peut ajouter l'acide urique à l'aliment par mélange intime avec l'aliment au cours de ou après sa fabrication. Ceci présuppose que l'aliment ou ses constituants se présentent de préférence sous forme subdivisée, pâteuse ou liquide au cours de ou après la fabrication.

Ladite étape de mélange intime peut par exemple se dérouler avant ou durant l'extrusion au cours d'un processus de cuisson-extrusion d'une matière alimentaire sous forme pâteuse pour produire des amuse-bouche par exemple, avant le séchage au cours d'un processus de séchage sur cylindre d'une suspension aqueuse de matière alimentaire pour produire des flocons déshydratés par exemple ou durant une homogénéisation au cours d'un processus de préparation d'une émulsion pour usage parentéral par exemple.

Les exemples ci-après sont donnés à titre d'illustration du procédé, du produit et de l'utilisation selon la présente invention. Les pourcentages ou rapports y sont donnés en poids sauf indication contraire.

Exemple 1

Pour préparer des flocons de céréales précuits déshydratés, on moud la veille des grains de blé entier dans un moulin à marteaux. On prépare trois lots de dispersion aqueuse de 5 kg de farine de blé dans 20 kg d'eau. On maintient un lot sans additif pour comparaison. On ajoute en brassant bien 1 000 μg d'acide urique par g de farine au second lot et 2 000 μg d'acide urique par g de farine au troisième lot, après avoir mis l'acide urique en dispersion à 5 % dans une solution à environ 10 % d'hydroxyde de potassium et avoir attendu que tout l'acide urique soit solubilisé.

On traite thermiquement chaque lot durant 60 s à 130 °C dans un échangeur de chaleur à surface râclée puis on sèche immmédiatement chaque lot durant environ 10 s sur un séchoir à deux cylindres chauffés avec de la vapeur à 4 bar, jusqu'à une teneur en humidité résiduelle de 3,4-3,8 %.

On obtient trois lots de flocons de céréales que l'on soumet à un test d'oxydation selon la procédure décrite ci-après ;

Test d'oxydation

On dispose les flocons de céréales dans des boîtes en fer étamé laquées stérilisées de 400 ml, à raison de 40 g de flocons d'un lot par boîte. On entrepose à 30 °C les boîtes hermétiquement fermées.

On analyse l'espace de tête de boîtes contenant des échantillons de flocons des trois lots après 1, 2 et 3 mois en déterminant la teneur en pentane, comme produit de dégradation de l'acide linoléique par oxydation, et la teneur en oxygène résiduel. On détermine la teneur en pentane par chromatographie en phase gazeuse et la teneur en oxygène par mesure de la susceptibilité paramagnétique.

Les résultats de ce test sont réunis dans le tableau ci-après :

Durée d'entreposage

| Echantillons | 1 mois | | 2 mois | | 3 mois | |
|---|---|---|---|---|---|---|
| | pentane $10^{-9}$ M | $O_2$ % | pentane $10^{-9}$ M | $O_2$ % | pentane $10^{-9}$ M | $O_2$ % |
| sans acide urique (comparaison) | 6,5 | 18 | 13 | 17 | 21,6 | 16 |
| avec 1000 μg/g d'acide urique | 5,9 | 19 | 13 | 19 | 18 | 18 |
| avec 2000 μg/g d'acide urique | 4,3 | 19 | 8,3 | 18 | 14 | 18 |

On voit qu'après un mois d'entreposage à 30 °C la différence entre l'échantillon de comparaison et les échantillons avec acide urique n'est pas grande. Par contre, après 2 et 3 mois le ralentissement de la production de pentane et de la consommation d'oxygène par suite de l'adjonction d'acide urique est très net.

Exemple 2

Pour préparer une émulsion du type émulsion parentérale, on mélange 10 % d'huile de tournesol, 1 % de lécithine de soja, 4 % de glucose et 85 % d'eau. On divise le mélange en plusieurs lots. On maintient un lot sans additif pour comparaison. On ajoute à un deuxième lot, pour comparaison également, 200 μg de gallate de propyle (GPE) par g d'huile dans l'émulsion. On ajoute à un troisième, un quatrième et un cinquième lot respectivement 1 000 μg, 5 000 μg et 10 000 μg d'acide urique par g d'huile dans l'émulsion, après avoir mis l'acide urique en dispersion à 5 % dans une solution à environ 10 % d'hydroxyde de potassium et avoir attendu que tout l'acide urique soit solubilisé.

On fait passer chaque lot 15 fois à travers un homogénéisateur à buse. On obtient cinq lots d'émulsion que l'on soumet à un test d'oxydation selon la procédure décrite ci-après :

3

# 0 226 211

Test d'oxydation

On dispose les émulsions dans des boîtes en aluminium laquées stérilisées de 250 ml, à raison de 20 ml d'émulsion d'un lot distinct par boîte. On entrepose à 30 °C les boîtes hermétiquement fermées.

On analyse l'espace de tête de boîtes contenant des échantillons d'émulsion des cinq lots après 10 j, 14 j, 28 j, 38 j et 42 j en déterminant la teneur en pentane et en éthane, comme produits de dégradation respectifs des acides linoléique et linolénique par oxydation, et la teneur en oxygène résiduel. On détermine la teneur en pentane et en éthane par chromatographie en phase gazeuse et la teneur en oxygène par mesure de la susceptibilité paramagnétique.

Les résultats de ce test sont réunis dans les tableaux ci-après :

ETHANE
$10^{-9}$ M

| Echantillons | après j: | | | | |
|---|---|---|---|---|---|
| | 10 | 14 | 28 | 38 | 42 |
| sans additif (comparaison) | 4,54 | 6,05 | 19,4 | 23,1 | 25,3 |
| 200 µg/g GPE (comparaison) | 1,73 | 2,16 | 2,27 | 2,27 | 2,59 |
| 1000 µg/g acide urique | 4,54 | 4,87 | 5,40 | 5,83 | 5,83 |
| 5000 µg/g acide urique | 3,46 | 3,88 | 4,11 | 4,21 | 4,32 |
| 10000 µg/g acide urique | 2,16 | 2,59 | 2,80 | 2,80 | 4,54 |

PENTANE
$10^{-9}$ M

| Echantillons | après j: | | | | |
|---|---|---|---|---|---|
| | 10 | 14 | 28 | 38 | 42 |
| sans additif (comparaison) | 0,48 | 3,06 | 8,05 | 12,4 | 17,4 |
| 200 µg/g GPE (comparaison) | 0,48 | 2,74 | 3,86 | 6,77 | 9,03 |
| 1000 µg/g acide urique | 0,97 | 1,77 | 4,50 | 8,06 | 9,35 |
| 5000 µg/g acide urique | 1,30 | 1,77 | 4,67 | 9,10 | 8,86 |
| 10000 µg/g acide urique | 0,48 | 2,42 | 3,76 | 6,36 | 8,40 |

4

O₂
%

| Echantillons après j: | 10 | 14 | 28 | 38 | 42 |
|---|---|---|---|---|---|
| sans additif (comparaison) | 19,6 | 15,3 | 1,02 | 1,02 | 1,02 |
| 200 µg/g GPE (comparaison) | 20,5 | 20,3 | 20,2 | 20,0 | 19,8 |
| 1000 µg/g acide urique | 19,8 | 19,8 | 19,5 | 19,2 | 19,0 |
| 5000 µg/g acide urique | 20,1 | 19,5 | 19,8 | 19,6 | 19,5 |
| 10000 µg/g acide urique | 20,5 | 20,3 | 19,5 | 19,8 | 19,7 |

On voit que la progression de la production d'éthane est pratiquement stoppée dès le 14ème jour d'entreposage par l'addition d'acide urique comme par l'addition de GPE. L'abaissement du niveau de production d'éthane est déjà remarquable pour une concentration de 1 000 µg/g d'acide urique et ne progresse que relativement peu pour des concentrations d'acide urique nettement plus fortes de 5 000 et 10 000 µg/g.

La production de pentane est également notablement limitée par l'addition d'acide urique.

Enfin, la consommation d'oxygène est abruptement interrompue entre le 14ème et le 28ème jour par l'addition d'acide urique comme par l'addition de GPE.

Exemple 3

Pour confectionner un aliment pour chats, on prépare un mélange sec à base de maïs, blé, farine de soja, farine de poisson, farine de poulet, sel, vitamines et oligoéléments. On prépare une dispersion aqueuse à base de miettes de poisson et de foie de bœuf.

On divise le mélange sec en quatre lots. On ajoute au premier lot 11 µg/g d'un mélange sec d'antioxydants à base de GPE et de BHT, pour comparaison. On ajoute aux deuxième, troisième et quatrième lots des quantités respectives d'acide urique de 11 µg/g, 33 µg/g et 99 µg/g.

On ajoute à la dispersion aqueuse 10 µl/ml d'une préparation liquide d'antioxydants à base de GPE et d'acide citrique. On humidifie chacun des quatre lots de mélange sec par addition de cette dispersion aqueuse et l'on soumet chacun des quatre mélanges humidifiés à un processus de cuisson-extrusion. On découpe en petits morceaux et l'on sèche les produits expansés obtenus à la sortie de l'extrudeuse. On obtient quatre lots d'aliment déshydraté pour chats.

On entrepose des échantillons d'aliment de ces quatre lots à 36 °C. On procède à des essais comparatifs d'alimentation par paires à l'aide de 18 chats durant 2 j après 30, 60 et 90 j d'entreposage des échantillons à 36 °C. Le résultat de ces essais montre une préférence marquée des chats pour les échantillons à base du mélange sec auquel on a ajouté 33 µg/g d'acide urique par rapport aux échantillons de comparaison à base du mélange sec auquel on a ajouté 11 µg/g d'antioxydant à base de GPE et de BHT. Par contre, les échantillons à 11 µg/g et 99 µg/g d'acide urique sont appréciés au même titre que les échantillons de comparaison.

**Revendications**

1. Procédé de protection d'un aliment contre l'oxydation, caractérisé par le fait que l'on ajoute de l'acide urique à l'aliment, à raison de 5-10 000 µg d'acide urique par g de matière sèche de l'aliment.

2. Procédé selon la revendication 1, caractérisé par le fait que l'on ajoute l'acide urique à l'aliment sous forme de sel de sodium, de potassium ou d'ammonium.

0 226 211

3. Utilisation de l'acide urique dans un aliment, à raison de 5-10 000 μg d'acide urique par g de matière sèche, pour le protéger contre l'oxydation;

4. Utilisation de l'acide urique selon la revendication 3, sous forme de sel de sodium, de potassium ou d'ammonium.

## Claims

1. A process for the production of a food against oxidation, characterized in that uric acid is added to the food in a quantity of from 5 to 10,000 μg uric acid per g food dry matter.

2. A process as claimed in claim 1, characterized in that the uric acid is added to the food in the form of the sodium, potassium or ammonium salt.

3. The use of uric acid in a food in a quantity of 5 to 10,000 μg per g dry matter to protect it against oxidation.

4. The use of uric acid as claimed in claim 3 in the form of the sodium, potassium or ammonium salt.

## Patentansprüche

1. Verfahren zum Schützen eines Nahrungsmittels gegen Oxidation, dadurch gekennzeichnet, daß man zu dem Nahrungsmittel Harnsäure im Ausmaß von 5 bis 10 000 μg Harnsäure je g Trockermaterial des Nahrungsmittels zusetzt.

2. Verfahren nach Anspruch 1, dadurch gekennzeichnet, daß man die Harnsäure dem Nahrungsmittel in Form eines Natrium-, Kalium- oder Ammoniumsalzes zusetzt.

3. Verwendung von Harnsäure in einem Nahrungsmittel im Ausmaß von 5 bis 10 000 μg Harnsäure je g Trockenmaterial zum Schutz des Nahrungsmittels gegen Oxidation.

4. Verwendung von Harnsäure nach Anspruch 3 in Form eines Natrium-, Kalium- oder Ammoniumsalzes.